# EUROPEAN PATENT SPECIFICATION

(11) **EP 4 293 333 B1**
(45) Date of publication and mention of the grant of the patent: **09.09.2026**
(21) Application number: 23206694.4
(22) Date of filing: 02.12.2021
(51) Int. Cl.: E04H 4/16, G01M 3/18

(54) **BATTERY DISCONNECTION USING WATER SENSING FOR UNDERWATER BATTERY-POWERED POOL CLEANING DEVICES**
BATTERIETRENNUNG MITTELS WASSERERFASSUNG FÜR BATTERIEBETRIEBENE UNTERWASSER-POOL-REINIGUNGSVORRICHTUNGEN
DÉCONNEXION DE BATTERIE À L'AIDE D'UNE DÉTECTION D'EAU POUR DISPOSITIFS DE NETTOYAGE DE PISCINE SOUS-MARINS ALIMENTÉS PAR BATTERIE

(30) Priority: 15.12.2020 US 202063125473 P
(43) Date of publication of application: 20.12.2023
(62) Document number(s) of the earlier application(s) in accordance with Art. 76 EPC: 21836681.3 / 4 263 979
(73) Proprietor: Zodiac Pool Systems LLC, Carlsbad, CA 92010 (US)
(72) Inventor: UY, Dindo, Vista, California 92081 (US); BARENG, Eusebio Domingo, Vista, California 92081 (US)
(74) Representative: Weickmann & Weickmann PartmbB

(56) References cited:
- EP-A2- 1 454 885
- CN-U- 204 064 594
- US-A1- 2003 221 250
- US-A1- 2005 235 306

## Description

### CROSS-REFERENCE TO RELATED APPLICATION

This application claims the benefit of and priority to U.S. Provisional Application Serial No. 63/125,473 filed December 15, 2020, entitled "Crowbar Circuit for Battery Used in Underwater Device,".

### BACKGROUND

Many underwater devices use batteries to provide power to operate the devices. If a battery in such a device gets wet, there is a risk of permanent damage to the device. Conventional approaches for preventing the battery from getting wet include sealing the chamber in which the battery is held from water intrusion. While this approach may be suitable for some applications, it is susceptible to failure when submerged at great depths and pressures, due to natural degradation of materials, and for other common reasons (e.g., abuse, crashes, etc.).
EP 1 454 885 A2 discloses an apparatus for diffusing ozone directly into water contained in a pool or a tank. For that purpose, an ozonator is disposed in a water-proof housing powered by a rechargeable battery. The battery compartment is located in the lower portion of the base of the housing and includes one or more batteries for powering the electrical components of the apparatus.
US 2003/0221250 A1 discloses a fluid leveler, including a sensor immersed in a pool. A processor is electrically connected to the sensor and detects low water level in the pool. A transmitter connected to the processor sends a radio frequency signal if the sensor detects low water level. The processor & the transmitter, and a battery powering both, are all arranged within a waterproof housing. A remote receiver receives the signal sent by the transmitter and turns on a valve for watering the pool.
US 2005/0235306 A1 discloses a method and a system for monitoring and controlling fluid/water-based systems in home and commercial businesses, such as water heaters, sinks, clothes washer, swimming pools & lawn sprinklers. The system is configured to detect certain alarm conditions, such as, when an interface module sensor has been tripped, an RF transmitter of the interface module has a low battery, a case where a loss of communication with the RF transmitter has occurred, a valve solenoid errors has occurred, etc. The patent publication further discloses a leak sensor that provides a signal to a controller, when it detects water leakage from a water heater, and on receiving that signal, the controller shuts off the electricity supply to the heating element of the heater.

### SUMMARY

The terms "disclosure," "the disclosure," "this disclosure" and "the present disclosure" used in this patent are intended to refer broadly to all of the subject matter of this patent and the patent claims below. Statements containing these terms should be understood not to limit the subject matter described herein or to limit the meaning or scope of the patent claims below. Embodiments of the subject matter covered by this patent are defined by the claims below, not this summary. This summary is a high-level overview of various aspects of the subject matter of the present disclosure and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

One general aspect includes a system for battery-powered swimming pool cleaners or other swimming pool equipment, according to the subject matter of independent claim 1.

Another general aspect includes a circuit board for battery-powered swimming pool cleaners or other swimming pool equipment. The circuit board includes a sensing circuit including a pair of probes to detect the presence of a liquid. The circuit board also includes a power circuit to power an electrical load. The circuit board also includes an electrical interrupter to interrupt flow of electricity to the power circuit. The circuit board also includes a crowbar circuit to cause the electrical interrupter to interrupt the flow of electricity to the power circuit responsive to receiving a signal from the sensing circuit.

Another general aspect includes a battery-powered underwater pool cleaning device. The battery-powered underwater pool cleaning device includes a compartment that defines an interior volume. The battery-powered underwater pool cleaning device also includes a power source disposed within the interior volume and configured to power the battery-powered underwater pool cleaning device. The battery-powered underwater pool cleaning device also includes circuitry electrically connected to the power source and disposed within the interior volume, and configured to: detect the presence of water in the interior volume, and disable the power to the battery-powered underwater pool cleaning device.

Another general aspect includes a method for operating battery-powered swimming pool cleaners or other swimming pool equipment, in accordance with the subject matter of independent claim 10.
One or more computer programs can be configured to perform particular operations or actions by virtue of including instructions that, when executed by data processing apparatus, cause the apparatus to perform the actions.

### BRIEF DESCRIPTION OF THE DRAWINGS

The accompanying drawings, which are incorporated into and constitute a part of this specification, illustrate one or more certain examples and, together with the description of the example, serve to explain the principles and implementations of the certain examples.
FIG. 1 illustrates an example battery-powered swimming pool cleaner and a flowchart showing a process for implementing techniques relating electrically disconnecting a battery based on water sensing, according to at least one example;
FIG. 2 illustrates a block diagram of an example system for use in a battery-powered swimming pool cleaner or other pool equipment for implementing techniques relating to electrically disconnecting a battery based on water sensing, according to at least one example;
FIG. 3 illustrates a circuit diagram illustrating elements of the system from FIG. 2 for implementing techniques relating to electrically disconnecting a battery based on water sensing, according to at least one example; and
FIG. 4 illustrates an example flowchart showing a process for implementing techniques relating to electrically disconnecting a battery based on water sensing, according to at least one example.

### DETAILED DESCRIPTION

The subject matter of embodiments of the present disclosure is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

Examples are described herein in the context of battery-powered underwater devices for use in pool and spa systems (e.g., a battery-powered swimming pool cleaner or other pool equipment). Those of ordinary skill in the art will realize that the following description is illustrative only and is not intended to be in any way limiting. For example, the techniques described herein can be applied to other underwater devices such as those not used in pool and spa systems. Reference will now be made in detail to implementations of examples as illustrated in the accompanying drawings. The same reference indicators will be used throughout the drawings and the following description to refer to the same or like items.

Many underwater devices such as robotic pool cleaners use a battery or batteries (either primary, such as non-rechargeable, or secondary, such as rechargeable) to provide power to operate the device. If the battery in such application gets wet, it is not advisable to use (drain) the battery or charge it (in case of secondary battery). Using or charging a wet battery, especially one that includes Lithium ion, can be hazardous in addition to risking permanent damage to the battery and other parts of the device.

To avoid the batteries from getting wet in the first place, the batteries are typically placed within a compartment of an underwater device that is sealed against water intrusion. Unfortunately, such sealing may at some point fail, eventually allowing water intrusion.

The devices, systems, and techniques described herein include various circuitry arrangements for electrically isolating a power source such as a battery from an electrical load upon detecting the presence of water within a sealed enclosure of an underwater device. Since water intrusion is more or less inevitable, the embodiments described herein provide an electrical mechanism to safely and securely disconnect the battery, thereby preventing the battery from use and charging.

In an illustrative example, a system for a battery-powered swimming pool cleaner or other swimming pool equipment may include a sensing circuit to detect the presence of water within an enclosure. The system may also include a power circuit electrically connected to the sensing circuit and configured to direct power to an electrical load of the battery-powered swimming pool cleaner or other swimming pool equipment. The system may also include a disabling circuit, sometimes referred to herein as a crowbar circuit, electrically connected to the sensing circuit and the power circuit. The disabling circuit may be configured to receive a signal from the sensing circuit (e.g., an input voltage), and, in response, disable the power circuit from powering the electrical load (e.g., short circuit the circuitry in a manner that causes a fuse to blow). The system may also include a battery to power the electrical load. Disabling the power circuit may include electrically isolating the battery, which may occur when the disabling circuit causes a short circuit in the circuitry, resulting in a voltage spike propagating through circuitry of the system until it causes an electrical interrupter to change from a first state to a second state. The electrical interrupter may be a fuse or a circuit breaker. Thus, this change in state may correspond to the fuse blowing or the circuit breaker tripping. Once this occurs, the battery can no longer be charged nor provide power to the electrical load of the battery-powered swimming pool cleaner or other swimming pool equipment.

This illustrative example is given to introduce the reader to the general subject matter discussed herein and the disclosure is not limited to this example. The following sections describe various additional non-limiting examples of battery-powered swimming pool equipment including sensing and disabling circuits.

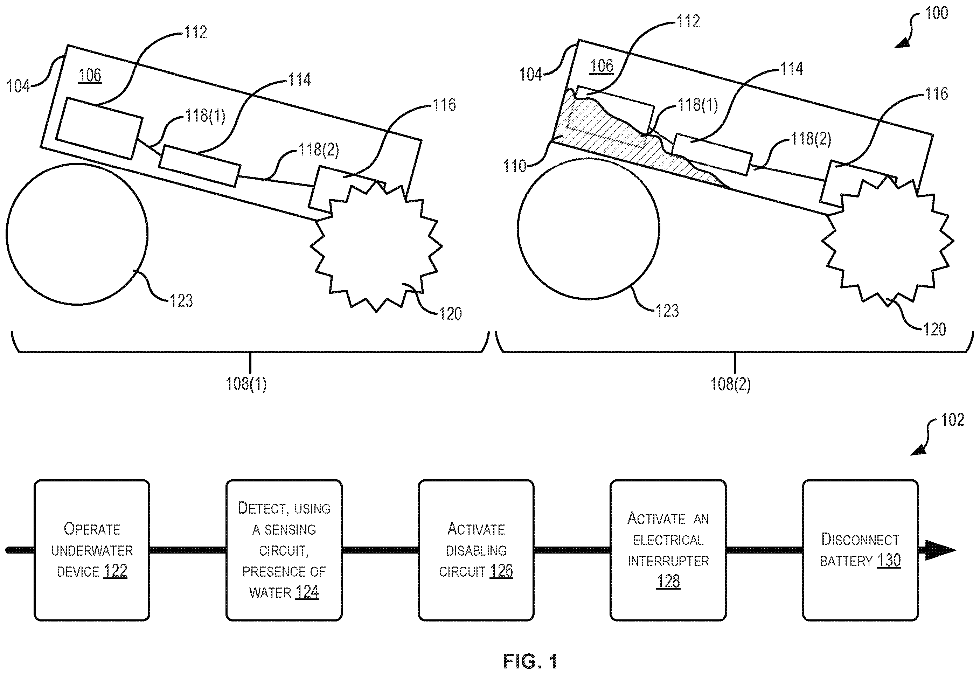

Referring now to the figures, FIG. 1 illustrates an example battery-powered swimming pool cleaner 100 and a flowchart showing a process 102 for implementing techniques relating to electrically disconnecting a battery based on water sensing, according to at least one example. An example of the battery-powered swimming pool cleaner is disclosed in U.S. Patent Application Publication No. 2018/0066444 of van der Meijden, et al.,

Other battery-powered devices, including automatic swimming pool cleaners and other equipment used in connection with swimming pools and spas that could use the described embodiments, are disclosed U.S. Patent Application Publication No. 2020/0056391 of Lancry, and 2020/0347630 of Durvasula, et al.

The battery-powered swimming pool cleaner 100 may include a body 104 including a compartment 106 that defines an interior volume. The compartment may be subdivided into multiple sub-compartments, resulting in multiple sub-volumes of the interior volume. Components, including electrical components of the battery-powered swimming pool cleaner 100, may be mounted within the compartment 106. The compartment 106 may be configured as a water tight enclosure capable of preventing intrusion of water at various pressure levels. In some examples, the body 104 and/or the compartment 106 may include an access opening to allow access to the interior volume of the compartment 106. Such access may be useful for replacing and/or repairing the components. For example, after an electrical interrupter has been triggered, the access opening may be opened to drain the water, allow the compartment 106 to dry out, and reset and/or replace damaged parts. The access opening may also be configured to prevent water ingress. For example, the access opening may include a gasket or other structure to create a water-tight seal. In some examples, the components are mounted within the compartment during assembly and the compartment is sealed in a way that does not allow user access to the interior volume. In this example, if water intrusion is detected and the electrical interrupter is triggered, the battery-powered swimming pool cleaner 100 may be fully disabled and/or require professional repair.

In FIG. 1, the battery-powered swimming pool cleaner 100 is illustrated in two states, a first state 108(1) and a second state 108(2). In the first state 108(1), the compartment 106 of the battery-powered swimming pool cleaner 100 is devoid of water or other liquid. In this first state 108(1), the battery-powered swimming pool cleaner 100 may be fully functional. In the second state 108(2), water 110 is shown within the compartment 106. The water 110 may have accessed the compartment 106 as a result of a failure or degradation of the water-tight seal of the compartment 106.

The components within the compartment 106 include a battery 112, a circuit board 114, and an electrical load 116. The battery 112 may be any suitable single-use or rechargeable power source. In some examples, the battery 112 may include more than one battery, perhaps included in a battery pack or otherwise wired together. The battery 112 may be any suitable type of battery including, for example, alkaline, Lithium-ion, Lithium polymer, and the like. The battery 112 may be electrically connected to the circuit board 114 via a first electrical connection 118(1), and the circuit board 114 may be electrically connected to the electrical load via a second electrical connection 118(2). Power from the battery 112 may flow through the circuit board 114 and into the electrical load 116 via the electrical connections 118. The circuit board 114, as described in detail in later figures, may include a power circuit or power control circuit to control how the power from the battery 112 is delivered to the electrical load.

The electrical load 116 may include any suitable motor, pump, light, sensor, computing device, networking device, communications device, or the like configured for powering by the battery 112. As shown in FIG. 1, the electrical load 116 may be a scrubber 120 and a set of motive elements, illustrated in FIG. 1 as drive wheels 123. The scrubber 120 may be connected to one or more drive motors and driven either separately or together. The set of drive wheels 123 may be similarly driven by the same one or more drive motors or a different drive motor. The scrubber 120 may function to scrub or otherwise clean a surface of a pool or spa as the battery-powered swimming pool cleaner 100 moves within the pool or spa. The drive wheels 123 may assist in moving the battery-powered swimming pool cleaner 100 along the surface of the pool or spa.

Turning now to the flow diagram depicting the process 102 in FIG. 1,. the process 102 may relate to the operation of the battery-powered swimming pool cleaner 100. At least a portion of the process 102 may be performed by circuitry on the circuit board 114, as shown in more detail herein. The process 102 begins at block 122 by operating an underwater device such as the battery-powered swimming pool cleaner 100. Operating the battery-powered swimming pool cleaner 100 may include a human configuring and enabling the battery-powered swimming pool cleaner 100 to operate. In some examples, once originally configured, the battery-powered swimming pool cleaner 100 may operate more or less autonomously. For example, the battery-powered swimming pool cleaner 100 may operate to clean surfaces of the pool and spa and then alert a user when some action needs to be taken, e.g., clean a filter, charge the battery, etc.

At block 124, the process 102 includes detecting, using a sensing circuit, the presence of water. For example, in the second state 108(2), the sensing circuit, a portion of which may be incorporated into the circuit board 114, may detect the presence of water 110 within the compartment 106. In some examples, the sensing circuit may include a pair of water-sensitive probes that, when water is present, detect a certain resistivity that can be shared with other circuits on the circuit board 114 as a signal of a sensed condition.

At block 126, the process 102 includes activating a disabling circuit. The disabling circuit, which may be incorporated into the circuit board 114, may be activated based on the sensing circuit detecting the presence of water 110. In some examples, the disabling circuit may be a crowbar circuit that is configured to short an electrical system of the circuit board 114 when the disabling circuit receives an electrical signal having some predefined properties. For example, the sensing circuit may send an input signal to the disabling circuit upon detecting the presence of the water.

At block 128, the process 102 includes activating an electrical interrupter. The electrical interrupter, which may be incorporated into the circuit board 114, may be activated based on the disabling circuit shorting the electrical system.

At block 130, the process 102 includes disconnecting the battery from the electrical system. The electrical interrupter, when triggered, may disconnect or otherwise isolate the battery from the circuit board 114 and the electrical load 116. This may function to electrical disconnect the first electrical connection 118(1).

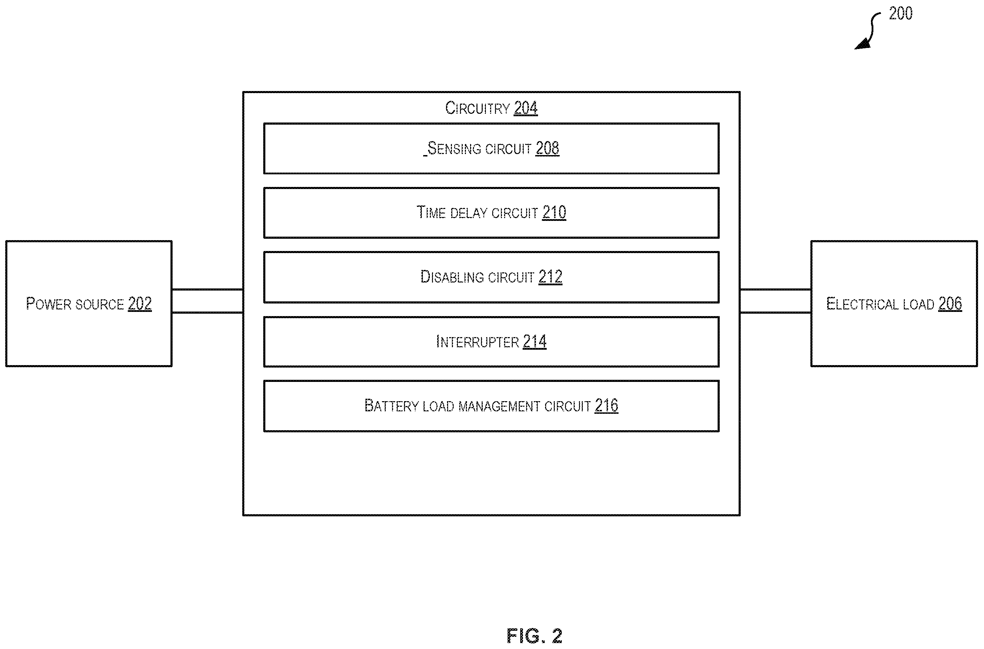

FIG. 2 illustrates a block diagram of an example system 200 for use in a battery-powered swimming pool cleaner or other pool equipment for implementing techniques relating to electrically disconnecting a battery based on water sensing, according to at least one example. The system 200 includes a power source 202, circuitry 204, and an electrical load 206. The power source 202 is an example of the battery 112, the circuitry 204 is an example of the circuit board 114, and the electrical load 206 is an example of the electrical load 116. The power source 202, the circuitry 204, and the electrical load 206 may be electrically connected.

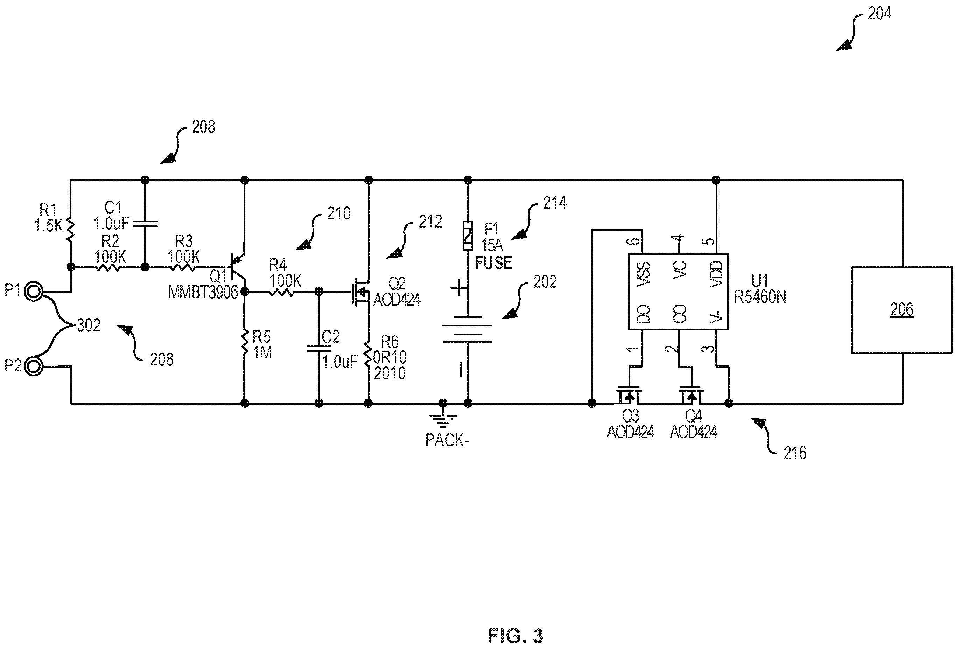

The circuitry 204, which may be incorporated into one or more circuit boards and/or as standalone components that are electrically connected, includes a sensing circuit 208, a time delay circuit 210, a disabling circuit 212, an interrupter 214, and a battery load management circuit 216. FIG. 3 is a circuit diagram 300 illustrating elements of the system 200 for implementing techniques relating to electrically disconnecting a battery based on water sensing, according to at least one example. In FIG. 3, certain circuits of the circuitry 204 have been omitted for purposes of illustrative clarity. Generally, the circuitry 204 may provide capability to control powering of the electrical load 206 by the power source 202 and charging of the power source 202, e.g., by an external charger. The individual circuits will be described with respect to FIGS. 2 and 3. At least some of the circuitry 204 may be mounted to or otherwise formed on and/or within a circuit board such as a printed circuit board.

Beginning first with sensing circuit 208, generally, the sensing circuit 208 may be configured to sense the presence of water at some location and generate an electrical signal of some form that is can be received by one of the elements such as the disabling circuit 212. As shown in FIG. 3, the sensing circuit 208 may include, among other things, a set of water-sensing probes 302 (e.g., labeled P1 and P2) and a resistor R1 that controls the sensitivity of the sensing circuit 208. The water-sensing probes 302 may be integrated as traces within the circuit board and/or may be situated at the end of electrical lead wires connected to the circuit board at one end and having a probe element at a second end. The water-sensing probes 302 may include any suitable combination of electrodes configured to have some level of resistance therebetween. When water is not present, the resistivity will be only the air between them. When water is present, the resistivity will be based on the water. This resistivity, when detected, can be used to generate the signal that is received by the disabling circuit 212.

In some examples, the sensing circuit 208 may include more than one set of water-sensing probes 302. For example, a first set of water-sensing probes 302 may be disposed at a first end of the circuit board and a second set may be disposed at a second end. In some examples, the different sets of water-sensing probes 302 may be disposed at different locations with respect to the device into which they are incorporated. For example, a first set of water-sensing probes 302 may be disposed within a first compartment of the device adjacent the power source 202, while a second set may be disposed within a second compartment of the device adjacent the circuit board upon which the circuitry 204 is mounted. Mounting the water-sensing probes 302 at different locations may allow for water sensing when the device is in different orientations. For example, a robotic pool cleaner, as described herein, may traverse many different surfaces having varying degrees of inclination. The water-sensing probes 302 may therefore be configured to sense water intrusion when the robotic pool cleaner is traversing the different inclinations. In some examples, the sensitivity of the sensing circuit 208 is between 25 and 100 kilo-ohms. In at least one example, the sensitivity of the sensing circuit 208 is about 47 kilo-ohms.

Turning now to the time delay circuit 210, the time delay circuit 210 may be configured to provide an RC time delay to avoid unintentional tripping of the interrupter 214 (labeled F1). In some examples, the time delay circuit 210 may include R2, R3, R4, R5, C1, C2, and Q1.

Turning now to the disabling circuit 212, the disabling circuit 212 may be configured to cause the interrupter 214 to trigger when the sensing circuit 208 detects water. In some examples, the disabling circuit 212 may be referred to as a crowbar circuit. The sensing circuit 208 may send a signal to the disabling circuit 212. In some examples, the signal may be voltage created by the sensing circuit 208 and that is read as an input voltage by the disabling circuit 212. The input voltage may have certain characteristics. The disabling circuit 212 may monitor the input voltage coming into the disabling circuit 212, and when the voltage exceeds a threshold as read from the characteristics such as voltage, the disabling circuit may create a short circuit across the power lines of the circuitry 204, which causes a voltage spike to propagate through the circuitry until it hits the interrupter 214. The interrupter 214 in this example is a fuse. The voltage spike causes the fuse to blow, which disconnects the power source 202 from the rest of the circuitry 204 and the electrical load 206. The disabling circuit 212 may include Q2 and R6. Q2 may be a metal-oxide-semiconductor field-effect transistor MOSFET transistor and, in some examples, may be a type AOD424.

Turning now to the interrupter 214, the interrupter 214 may be configured to interrupt power flow to the battery load management circuit 216 responsive to the disabling circuit 212 being triggered. As introduced, the interrupter 214 may be a fuse (F1) configured to blow. The interrupter 214 may also be a circuit breaker that can be reset after tripping.

Turning now to the battery load management circuit 216, the battery load management circuit 216 may function as a power circuit that controls the flow of power from the power source 202 into the electrical load 206. In some examples, the battery load management circuit 216 may include U1, Q3, and Q4. In some examples, Q3 and Q4 may also be MOSFET transistors of the type AOD424. The UI may be a high voltage CMOS-based protection integrated circuit for over-charge/discharge of a rechargeable two-cell Lithium-ion (Li+) / Lithium polymer. The UI may further include a short circuit protection circuit for preventing external short circuit current. The UI may also include protection circuits to protect against the excess discharge-current and excess charge current. Each of these integrated circuits may be composed of multiple voltage detectors (e.g., 2, 3, 4, 5, 6, 7, 8, 9, 10, or more than 10), a reference unit, a delay circuit, a short circuit protector, an oscillator, a counter, and a logic circuit. As part of the battery load management circuit 216 or separately may be provided a battery charging circuit.

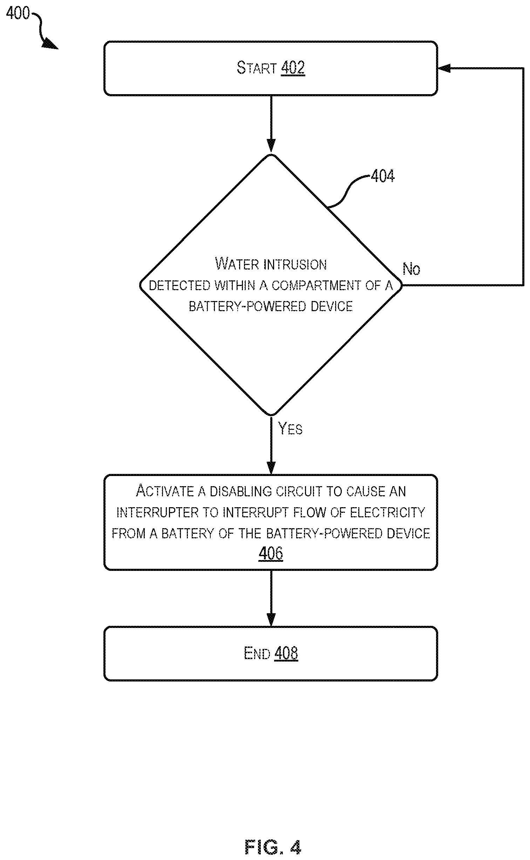

FIG. 4 illustrates an example flowchart showing a process 400 for implementing techniques relating to electrically disconnecting a battery based on water sensing, according to at least one example. The process 400 may be performed by the circuitry 204. The process 400 may begin at block 402. At block 404, the process 400 includes determining whether water intrusion has been detected within a compartment of a battery-powered device. This block may be performed by the sensing circuit 208 as described herein (e.g., using a pair of probes). If the answer at block 404 is NO, the process 400 returns to the starting block at block 402. If the answer at block 404 is YES, the process 400 continues to block 406. At block 406, the process 400 includes activating a disabling circuit to cause an interrupter to interrupt flow of electricity from a battery of the battery-powered device. This block may be performed by the disabling circuit 212 and the interrupter 218, as described herein. After the circuit has been interrupted/disabled, the process 400 may end at 408.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations, and/or additions to the present subject matter as would be readily apparent to one of ordinary skill in the art. Indeed, the methods and systems described herein may be embodied in a variety of other forms; furthermore, various omissions, substitutions and changes in the form of the methods and systems described herein may be made without departing from the scope of the present disclosure. The accompanying claims are intended to cover such forms or modifications as would fall within the scope of the present disclosure.

Finally, references to "pools" and "swimming pools" herein may also refer to spas or other water containing vessels used for recreation or therapy and for which cleaning is needed or desired.

Unless specifically stated otherwise, it is appreciated that throughout this specification discussions utilizing terms such as "processing," "computing," "calculating," "determining," and "identifying" or the like refer to actions or processes of a computing device, such as one or more computers or a similar electronic computing device or devices, that manipulate or transform data represented as physical, electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provide a result conditioned on one or more inputs. Suitable computing devices include multipurpose microprocessor-based computing systems accessing stored software that programs or configures the computing system from a general purpose computing apparatus to a specialized computing apparatus implementing one or more embodiments of the present subject matter. Any suitable programming, scripting, or other type of language or combinations of languages may be used to implement the teachings contained herein in software to be used in programming or configuring a computing device.

Embodiments of the methods disclosed herein may be performed in the operation of such computing devices. The order of the blocks presented in the examples above can be varied-for example, blocks can be re-ordered, combined, and/or broken into sub-blocks. Certain blocks or processes can be performed in parallel.

Conditional language used herein, such as, among others, "can," "could," "might," "may," "e.g.," and the like, unless specifically stated otherwise, or otherwise understood within the context as used, is generally intended to convey that certain examples include, while other examples do not include, certain features, elements, and/or steps. Thus, such conditional language is not generally intended to imply that features, elements and/or steps are in any way required for one or more examples or that one or more examples necessarily include logic for deciding, with or without author input or prompting, whether these features, elements and/or steps are included or are to be performed in any particular example.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain examples require at least one of X, at least one of Y, or at least one of Z to each be present.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and all three of A and B and C.

The use of the terms "a" and "an" and "the" and similar referents in the context of describing the disclosed examples (especially in the context of the following claims) are to be construed to cover both the singular and the plural, unless otherwise indicated herein or clearly contradicted by context. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. The use of "adapted to" or "configured to" herein is meant as open and inclusive language that does not foreclose devices adapted to or configured to perform additional tasks or steps. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein, and each separate value is incorporated into the specification as if it were individually recited herein. Additionally, the use of "based on" is meant to be open and inclusive, in that a process, step, calculation, or other action "based on" one or more recited conditions or values may, in practice, be based on additional conditions or values beyond those recited. Similarly, the use of "based at least in part on" is meant to be open and inclusive, in that a process, step, calculation, or other action "based at least in part on" one or more recited conditions or values may, in practice, be based on additional conditions or values beyond those recited. Headings, lists, and numbering included herein are for ease of explanation only and are not meant to be limiting.

Certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed examples. Similarly, the example systems and components described herein may be configured differently than described. For example, elements may be added to, removed from, or rearranged compared to the disclosed examples.

## Claims

1. A system for battery-powered swimming pool cleaners (100) or other swimming pool equipment, comprising:
a sensing circuit (208) to detect the presence of water;
a power circuit (216) electrically connected to the sensing circuit (208) and configured to direct power to an electrical load (116, 206); **characterised in that** the system further comprises:
a disabling circuit (212) electrically connected to the sensing circuit (208) and the power circuit (216), and configured to:
receive a signal from the sensing circuit (208); and
responsive to receiving the signal, disable the power circuit (216) from powering the electrical load (116, 206).

2. The system of claim 1, wherein the system further comprises a fuse (214) electrically connected between the power circuit (216) and the disabling circuit (212), and wherein disabling the power circuit (216) from powering the electrical load (116, 206) comprises causing the fuse (214) to blow, wherein the sensing circuit (208) preferably comprises one or more probe sets (302), the sensing circuit (208), the power circuit (216), and the disabling circuit (212) are preferably formed in on a single circuit board, and wherein the system preferably further comprises a power source (112) electrically connected to the power circuit (216) and the disabling circuit (212), the power source being preferably configured to power the electrical load (116, 206).

3. The system of claim 2, wherein the power source (112) comprises one or more batteries (112).

4. The system of claim 3, wherein the one or more batteries (112) are rechargeable.

5. The system of claim 2, wherein the sensing circuit (208) is further configured to detect the presence of water at the power source (112).

6. The system of claim 2, wherein disabling the power circuit (216) from powering the electrical load (116, 206) electrically disconnects the power source (112) from the electrical load, thereby preventing the power source (112) from draining and charging.

7. The system of claim 2, further comprising an underwater device comprising a compartment (106) that defines an interior volume, and wherein the sensing circuit (208), the power circuit (216) and the disabling circuit (212) are disposed within the interior volume.

8. The system of claim 7, wherein the sensing circuit (208) is further configured to detect the presence of water within the interior volume.

9. The system of claim 7, wherein the compartment is sealed against water ingress.

10. A method for operating battery-powered swimming pool cleaners (100) or other swimming pool equipment, comprising:
detecting water intrusion within a compartment of a battery-powered device; and
responsive to detecting the water intrusion, activating a disabling circuit (212) configured to cause an interrupting circuit to interrupt flow of electricity from a battery (112) of the battery-powered device.

11. The method of claim 10, wherein the disabling circuit (212) comprises a crowbar circuit and the interrupting circuit comprises a fuse (214).

12. The method of claim 10, wherein detecting the water intrusion within the compartment comprises using a sensing circuit (208) that includes a pair of probes (302) to detect the presence of water within the compartment.

13. The method of claim 10, wherein activating the disabling circuit (212) comprises opening the disabling circuit (212) to allow electrical current to flow to the interrupting circuit, wherein the electrical current comprises a characteristic that exceeds a disabling threshold associated with the disabling circuit (212).

14. The method of claim 13, wherein the characteristic comprises a voltage.

15. The method of claim 10, wherein activating the disabling circuit (212) to cause the interrupting circuit to interrupt the flow of electricity from the battery (112) comprises electrically isolating the battery (112), thereby preventing the battery (112) from discharging or charging.

## Patentansprüche

1. System für batteriebetriebene Schwimmbadreiniger (100) oder andere Schwimmbadausrüstung, umfassend:
eine Erfassungsschaltung (208), um das Vorhandensein von Wasser zu detektieren;
eine Leistungsschaltung (216), welche elektrisch mit der Erfassungsschaltung (208) verbunden ist und dazu eingerichtet ist, Leistung an eine elektrische Last (116, 206) zu leiten; **dadurch gekennzeichnet, dass** das System ferner umfasst:
eine Abschaltschaltung (212), welche elektrisch mit der Erfassungsschaltung (208) und der Leistungsschaltung (216) verbunden ist und welche eingerichtet ist, zum:
Empfangen eines Signals von der Erfassungsschaltung (208); und
als Reaktion auf das empfangene Signal, Ausschalten der Leistungsschaltung (216) vom Betreiben der elektrischen Last (116, 206).

2. System nach Anspruch 1, wobei das System ferner eine Sicherung (214) umfasst, welche elektrisch zwischen die Leistungsschaltung (216) und die Abschaltschaltung (212) geschaltet ist, und
wobei ein Abschalten der Leistungsschaltung (216) vom Betreiben der elektrischen last (116, 206) ein Verursachen eines Durchbrennens der Sicherung (214) umfasst, wobei die Erfassungsschaltung (208) vorzugsweise eine oder mehrere Sondengruppen (302) umfasst, wobei die Erfassungsschaltung (208), die Leistungsschaltung (216) und die Abschaltschaltung (212) vorzugsweise an einer einzelnen Schaltungsplatte gebildet sind, und wobei das System vorzugsweise ferner eine Leistungsquelle (112) umfasst, welche elektrisch mit der Leistungsschaltung (216) und der Abschaltschaltung (212) verbunden ist, wobei die Leistungsquelle vorzugsweise dazu eingerichtet ist, die elektrische Last (116, 206) zu betreiben.

3. System nach Anspruch 2, wobei die Leistungsquelle (112) eine oder mehrere Batterien (112) umfasst.

4. System nach Anspruch 3, wobei die eine oder die mehreren Batterien (112) wiederaufladbar sind.

5. System nach Anspruch 2, wobei die Erfassungsschaltung (208) ferner dazu eingerichtet ist, das Vorhandensein von Wasser an der Leistungsquelle (112) zu detektieren.

6. System nach Anspruch 2, wobei das Abschalten der Leistungsquelle (216) vom Betreiben der elektrischen Last (116, 206) die Leistungsquelle (112) elektrisch von der elektrischen Last trennt, wodurch ein Entladen und Laden der Leistungsquelle (112) verhindert wird.

7. System nach Anspruch 2, ferner umfassend eine Unterwasservorrichtung, welche eine Kammer (106) umfasst, welche ein inneres Volumen definiert, und wobei die Erfassungsschaltung (208), die Leistungsschaltung (216) und die Abschaltschaltung (212) innerhalb des inneren Volumens angeordnet sind.

8. System nach Anspruch 7, wobei die Erfassungsschaltung (208) ferner dazu eingerichtet ist, das Vorhandensein von Wasser innerhalb des inneren Volumens zu detektieren.

9. System nach Anspruch 7, wobei die Kammer gegen das Eindringen von Wasser abgedichtet ist.

10. Verfahren zum Betreiben batteriebetriebener Schwimmbadreiniger (100) oder anderer Schwimmbadausrüstung, umfassend:
Detektieren eines Eindringens von Wasser innerhalb einer Kammer einer batteriebetriebenen Vorrichtung; und
als Reaktion auf das Detektieren des Eindringens von Wasser, Aktivieren einer Abschaltschaltung (212), welche dazu eingerichtet ist, eine Unterbrechungsschaltung dazu zu veranlassen, einen Stromfluss von einer Batterie (112) der batteriebetriebenen Vorrichtung zu unterbrechen.

11. Verfahren nach Anspruch 10, wobei die Abschaltschaltung (212) einen Überspannungsschutz umfasst und die Unterbrechungsschaltung eine Sicherung (214) umfasst.

12. Verfahren nach Anspruch 10, wobei das Detektieren des Eindringens von Wasser innerhalb der Kammer ein Verwenden einer Erfassungsschaltung (208) umfasst, welche ein Paar von Sonden (302) umfasst, um das Vorhandensein von Wasser innerhalb der Kammer zu detektieren.

13. Verfahren nach Anspruch 10, wobei das Aktivieren der Abschaltschaltung (212) ein Öffnen der Unterbrechungsschaltung (212) umfasst, um es einem elektrischen Strom zu ermöglichen, zu der Unterbrechungsschaltung zu fließen, wobei der elektrische Strom eine Eigenschaft umfasst, welche einen Abschaltschwellenwert überschreitet, welcher mit der Abschaltschaltung (212) assoziiert ist.

14. Verfahren nach Anspruch 13, wobei die Eigenschaft eine Spannung umfasst.

15. Verfahren nach Anspruch 10, wobei das Aktivieren der Abschaltschaltung (212) um die Unterbrechungsschaltung dazu zu veranlassen, den Stromfluss von der Batterie (112) zu unterbrechen, ein elektrisches Isolieren der Batterie (112) umfasst, wodurch ein Entladen oder Laden der Batterie verhindert wird.

## Revendications

1. Système pour nettoyeurs de piscine alimentés par batterie (100) ou autres équipements de piscine, comprenant :
un circuit de détection (208) pour détecter la présence d'eau ;
un circuit d'alimentation (216) connecté électriquement au circuit de détection (208) et conçu pour diriger l'alimentation vers une charge électrique (116, 206) ;
**caractérisé en ce que** le système comprend en outre :
un circuit de désactivation (212) connecté électriquement au circuit de détection (208) et au circuit d'alimentation (216) et conçu pour :
recevoir un signal provenant du circuit de détection (208) ; et
en réponse à la réception du signal, empêcher le circuit d'alimentation (216) d'alimenter la charge électrique (116, 206).

2. Système selon la revendication 1,
dans lequel le système comprend en outre un fusible (214) connecté électriquement entre le circuit d'alimentation (216) et le circuit de désactivation (212), et
le fait d'empêcher le circuit d'alimentation (216) d'alimenter la charge électrique (116, 206) consiste à provoquer le claquage du fusible (214),
le circuit de détection (208) comprend de préférence un ou plusieurs ensembles de sondes (302),
le circuit de détection (208), le circuit d'alimentation (216) et le circuit de désactivation (212) sont de préférence formés sur une seule carte de circuit imprimé, et
de préférence, le système comprend en outre une source d'alimentation (112) connectée électriquement au circuit d'alimentation (216) et au circuit de désactivation (212), la source d'alimentation étant de préférence conçue pour alimenter la charge électrique (116, 206).

3. Système selon la revendication 2,
dans lequel la source d'alimentation (112) comprend une ou plusieurs batteries (112).

4. Système selon la revendication 3,
dans lequel la ou les batteries (112) sont rechargeables.

5. Système selon la revendication 2,
dans lequel le circuit de détection (208) est en outre conçu pour détecter la présence d'eau au niveau de la source d'alimentation (112).

6. Système selon la revendication 2,
dans lequel le fait d'empêcher le circuit d'alimentation (216) d'alimenter la charge électrique (116, 206) consiste à déconnecter électriquement la source d'alimentation (112) de la charge électrique, empêchant ainsi la source d'alimentation (112) de se décharger et de se recharger.

7. Système selon la revendication 2,
comprenant en outre un dispositif immergé comprenant un compartiment (106) qui définit un volume intérieur, sachant que le circuit de détection (208), le circuit d'alimentation (216) et le circuit de désactivation (212) sont disposés à l'intérieur du volume intérieur.

8. Système selon la revendication 7,
dans lequel le circuit de détection (208) est en outre conçu pour détecter la présence d'eau à l'intérieur du volume intérieur.

9. Système selon la revendication 7,
dans lequel le compartiment est étanche à la pénétration d'eau.

10. Procédé de fonctionnement de nettoyeurs de piscine alimentés par batterie (100) ou d'autres équipements de piscine, consistant à :
détecter une infiltration d'eau à l'intérieur d'un compartiment d'un dispositif alimenté par batterie ;
en réponse à la détection de l'infiltration d'eau, activer un circuit de désactivation (212) conçu pour amener un circuit de coupure à interrompre le flux d'électricité provenant d'une batterie (112) du dispositif alimenté par batterie.

11. Procédé selon la revendication 10,
dans lequel le circuit de désactivation (212) comprend un circuit de blocage et le circuit de coupure comprend un fusible (214).

12. Procédé selon la revendication 10,
dans lequel la détection de infiltration d'eau à l'intérieur du compartiment consiste à utiliser un circuit de détection (208) qui comprend une paire de sondes (302) pour détecter la présence d'eau à l'intérieur du compartiment.

13. Procédé selon la revendication 10,
dans lequel l'activation du circuit de désactivation (212) consiste à ouvrir le circuit de désactivation (212) pour permettre au courant électrique de circuler vers le circuit de coupure,
le courant électrique présente une caractéristique qui dépasse un seuil de désactivation associé au circuit de désactivation (212).

14. Procédé selon la revendication 13,
dans lequel la caractéristique comprend une tension.

15. Procédé selon la revendication 10,
dans lequel l'activation du circuit de désactivation (212) pour amener le circuit de coupure à interrompre le flux d'électricité provenant de la batterie (112) consiste à isoler électriquement la batterie (112), empêchant ainsi la batterie (112) de se décharger ou de se recharger.
